# EUROPEAN PATENT APPLICATION

(11) **EP 3 641 083 A1**
(43) Date of publication of application: **22.04.2020**
(21) Application number: 18382742.7
(22) Date of filing: 17.10.2018
(51) Int. Cl.: H02G 3/14

(54) **COVER AND SUPPORT ASSEMBLY FOR A HOUSING**

(71) Applicant: Simon, S.A.U., 08013 Barcelona (ES)
(72) Inventor: Faundez Barroso, David, 08013 Barcelona (ES)
(74) Representative: Balder IP Law, S.L.

(57) **Abstract**

Cover (1) and support (2, 4) assembly (A) for a housing (V), the cover (1) and the support (2, 4) being hinged by a hinge (H), such that the cover (1) can rotate (R) with respect to the support (2, 4) in a direction that is perpendicular to the cover (1), wherein both the cover (1) and the support (2, 4) comprise a part (11, 21) made of a magnetic or ferromagnetic material, the parts (11, 21) being arranged in the cover (1) and the support (2, 4) and placed in the proximity of the hinge (H) respectively such that they define at least a first and a second stable positions of the cover (1) with respect to the support (2, 4).

## Description

### TECHNICAL FIELD

The invention relates to a cover and frame assembly for a housing, preferably an electric socket, having a great simplicity, aesthetic quality, and also which opening mechanism guarantees a very long service life.

### STATE OF THE ART

Socket covers are known, and in particular those to cover the receiving receptacle for the male plug.

Some sockets are used often and are not seen, such as the refrigerator or television sockets. Others are visible and are always or almost always used, such as sockets for dining room lamps. On the other hand, others are visible and are used sporadically and for short periods of time, such as the bathroom socket, which is used for a dryer or a razor.

These sockets are more likely to accumulate dust inside. To mitigate this drawback, it is customary to use covers, consisting of a simple cover concealing the access to the socket outlet. These covers may be fully removable or be hinged.

Examples of the latter are those shown in WO2018/033655A1, which discloses an assembly to cover sockets wherein a cover and a frame are hinged by a hinge, the hinge being formed by a protrusion protruding from the cover or from the frame and a cavity in the frame or in the cover respectively, the protrusion being complementary to the cavity such that the cover can rotate with respect to the frame in a direction that is perpendicular to the cover wherein either the protrusion or part of the envelope of the cavity is made of a magnetic material, the other being made of a magnetic or ferromagnetic material such that the hinge can be disassembled by pulling the cover in the direction perpendicular to the surface thereof.

WO2018/033655A1 discloses both in the cover and the frame and at a point diametrically opposite to the protrusion or the cavity, removable attachment means between the cover and the frame intended to provide stability to the cover with respect to the frame when the cover is in a closing configuration. The removable attachment means in document WO2018/033655A1 can be made of magnetic parts.

The known hinge mechanism has one single equilibrium position that corresponds to the closed position of the cover in relation to the support and serves efficiently to the purpose of avoiding dust from entering the socket.

However it is often desirable to be able to fix the cover in other positions of its angular trajectory around the hinge. Particularly, in terms of usability and due to aesthetic reasons, it is often convenient to fix the cover at its open position, that is, at a position wherein the socket is fully visible.

The open position is an instable equilibrium position in which the center of mass of the cover is at the highest point of its angular trajectory around the hinge i.e. around the rotation axis that perpendicularly intersects the cover and the support at the point where the hinge is.

It would be desirable to obtain an assembly that combines the possibilities of a hinge in which a cover and a frame are hinged producing a single degree of freedom joint between the cover and the frame and allowing a rotation that constrains the cover and the frame to stay in the plane of the assembly while simultaneously providing stable positions at least in the closed configuration and in the fully opened configuration.

### DESCRIPTION OF THE INVENTION

For overcoming the afore mentioned aims, the present invention proposes a cover and a support assembly for a housing, the cover and the support assembly being hinged by a hinge, the hinge being configured to allow the cover to rotate with respect to the support assembly in a direction that is perpendicular to the cover, wherein both, the cover and the support assembly, comprise a part made of a magnetic or ferromagnetic material, the magnetic or ferromagnetic parts being arranged in the cover and the support assembly and placed in the proximity of the hinge such that they define at least a first and a second stable positions of the cover with respect to the support assembly, the cover covering the housing in a first position, a second position being placed at an angle from the first position, the second position corresponding to a configuration where the cover is in an opened position.

In the present description, stable positions of the cover should be understood as those corresponding to valleys of the potential energy of the cover. According to the present invention, this potential will be mainly determined by the magnetic potential of the magnetic parts and to a lesser extent by the gravitational potential. To achieve this, the cover should be very light, since its main function is that of a barrier against dust, and therefore the magnetic parts will be dimensioned so that it is clearly the magnetic potential that predominates.

Preferably, the magnetic or ferromagnetic parts comprise a negative pole in one of its largest surfaces and the positive in the opposite surface. The magnetic parts are disposed in a way that the surface with the negative pole of one of the magnetic or ferromagnetic parts is in contact with the surface with the positive pole of the other magnetic or ferromagnetic part. In these circumstances, the binding force is maximum, so that a minimum of potential energy is obtained.

By hinge, features that allow a single degree of freedom of the cover with respect to the support must be understood, said degree of freedom consisting in a rotation about the axis of rotation.

Therefore, the invention encompasses two cases:
- a first case in which the guiding function of the rotation around the axis perpendicular to the cover is exclusively carried out by the magnetic or ferromagnetic parts, and therefore the hinge is performed exclusively by magnetic forces; and
- a second case in which the function of guiding the rotation around the axis perpendicular to the cover is also aided by other elements.

In the first case, it can be conceived that the contact between the support and the cover is a flat surface, that the magnets have a permanent attraction force, although several positions of minimum potential energy are defined that correspond to the stable positions of the cover.

In the second case, the guiding function is aided by means of other elements, such as for example a combination of complementary concavity and protrusion, which more specific case, pin and orifice, is described below.

In some embodiments, the hinge is formed by a pin protruding from the cover or from the support and an orifice in the support or in the cover respectively, the orifice being complementary to the pin, the magnetic or ferromagnetic parts being placed in the proximity of the pin and orifice of the hinge respectively.

On one hand the pin and orifice pair guarantees an efficient rotating guide, whereas the magnetic parts guarantee stable positions of the cover around the hinge, which can be in lower positions as well as in upper positions.

That is, the present pin and orifice hinge mechanism is independent from the magnetic parts that define the stable positions of the cover with respect to the support assembly, which results in a structure that simultaneously provides a very secure force-fit between the pin and the orifice in which the pin does not fall out unless the pin is intentionally driven out, while it allows for the cover to be removed with a very simple gesture due to the fact that the hinge produces a single degree of freedom joint between the cover and the frame. In addition, the single degree of freedom joint allows a rotation that constrains the cover and the frame to stay in the plane of the support assembly, and thus, it does not occupy space in the direction perpendicular to the wall. In addition, it has a very simple design since the number of mechanically interconnected moving elements and the supporting forces are kept to a minimum. Thus, an incorrect handling thereof, such as forcing a movement away of the cover from the support, does not cause stress in the hinge that could lead to its early deterioration or breakage.

Thus the hinge of this invention constitute a simple design that provides the possibility to fix the cover at positions which are not stable equilibrium positions, particularly, to fix the cover at its non-stable equilibrium position forming a 180º angle with respect to the stable equilibrium position. Particularly the pin and orifice forming the hinge provides a simple and stable design.

In addition the magnetic parts of this invention are advantageous in terms of providing further stability to the stable equilibrium position because it forces the cover to remain aligned with the support assembly even the case that an obstacle or friction forces prevent the gravitational force from positioning the cover at the position where the final torque on the cover is zero i.e. at the closed position of the cover.

To maximize the effect of the magnetic parts, and their tendency to bring the cover to their stable positions, it is advantageously envisaged to reduce friction as much as possible, which occurs mainly between the pin and the orifice. For this purpose, the magnets preferably comprise a nickel-plated coating that reduces the friction coefficient.

Moreover, since the stable positions correspond to valleys in the potential magnetic energy, when the cover is near the stable positions, the cover is propelled to these positions without the need to go on pushing it. This is an ergonomic benefit for the user, since he has not to worry to accompany the cover to its final position.

In other words, it is provided that the cover is propelled to the next stable position when the magnetic potential peak is exceeded, and in the event that the impulse provided by the user does not reach the cover at this point where the magnetic potential has its maximum peak, the cover would retract to the previous equilibrium position, so that the position of the cover is guided between stable positions, and whatever the manipulation, the cover ends in a stable position.

Said in other words, the magnetic parts placed symmetrically with respect to the rotation axis also ensure the alignment of the cover in relation to the support assembly when the support assembly is positioned such that, in the stable equilibrium position of the cover, the cover does not fully cover the housing. Such a deviation may for instance occur when the support assembly or the socket are not in a plane perpendicular to the floor or when the hinge is not correctly centered. In such cases, the magnetic parts of this invention can counterbalance the torque exerted by the gravitation force which otherwise would bring the cover to its equilibrium position. Thus, the magnetic parts of this invention serve to counterbalance the torques exerted by the gravitation force so that position of the cover can be controlled and adjusted.

The fact that the orifice and pin hinge mechanism is independent of the magnetic parts that define the stable positions, allows for the use of different materials for the hinge mechanism i.e. pin and orifice mechanism and for the magnetic stabilising parts. For the magnetic material neodymium is preferred, due to its long operating life characteristics. For the orifice and pin hinge mechanism material polycarbonate is preferred due to its strength and toughness easiness to be worked and moulded.

In some embodiments, the support assembly is a frame that can be mounted on an existing socket. In this way the support assembly can be provided as an accessory for existing plugs.

In other embodiments, the frame has an internal perimeter complementary to a protruding wall of a base. In this way a better fit of the support assembly in a socket is achieved.

By 'base' it should be understood a box or structure intended to be embedded in a wall, generally comprising electrical connections and a receptacle for the male plug.

In some embodiments of the invention, the external perimeters of the cover and the frame match thus providing an improved aesthetics.

In some embodiments of the invention, the support assembly comprises an adhesive for joining the frame to a socket base.

In some embodiments of the invention, the support assembly is a base destined to be embedded in a wall. Therefore, although as explained above the support assembly can be a simple frame that is joined to an existing socket, it is also envisaged by the present invention that said support assembly constitutes an integral part of the socket base. In other words, it can be envisaged that the orifice and the corresponding magnetic part are arranged in the socket that is embedded in the wall, with a view to joining the cover there.

In some embodiments of the invention the base is an electric socket.

In some embodiments of the invention, the magnetic part of the cover is totally embedded in the cover, is flush fitted with the surface which faces the support assembly, is fitted and protruding from the surface which faces the support assembly or is joined to the surface which faces the support assembly.

In some embodiments of the invention the magnetic part of the support assembly is totally embedded in the support assembly, is flush fitted with the surface which faces the cover, is fitted and protruding from the surface which faces the cover or is joined to the surface which faces the cover.

In some embodiments of the invention the magnetic parts define four stable positions angularly distributed. The counterbalance torque exerted by the magnetic parts serve to stabilise the position of the cover, i.e. the magnetic parts may stabilise the cover at different positions along its angular trajectory in relation to the support assembly e.g. at, 45º, 90º, 135º etc.

In some embodiments of the invention, the magnetic part of the cover or the support has a through hole such that the pin, protruding from the cover or the support respectively, passes therethrough.

In some embodiments of the invention, the pin is made of two semi-cylindrical portions separated by a gap, each semi-cylindrical portion comprising a retaining hook.

In some embodiments of the invention, the magnetic parts are oblong, the longitudinal dimension being comprised between 12 and 14 mm, the transversal dimension being comprised between 4 and 6 mm, the thickness being comprised between 1 and 2 mm. More preferably these dimensions will be 13.6 x 5 x 1.5 mm respectively. Thanks to the magnetic parts being oblong, two stable positions, placed at 180º therebetween, are defined.

There are many ways to achieve many stable positions, which correspond to different combinations of position of the magnets:
Magnet type 1: A magnet with a central part and at least two opposed end protrusions;
Magnet type 2: Several magnets distributed radially around the axis of the hinge;

Also embodiments combining the two aforementioned types can be implemented. For example, in one embodiment there may be two type 1 magnets where the protrusions coincide, two type 2 magnets where the radially distributed magnets coincide, or a type 1 magnet and a type 2 magnet where the protrusions coincide with the radially distributed magnets.

In some embodiments of the invention, the cover is circular.

### BRIEF DESCRIPTION OF THE DRAWINGS

To complete the description and in order to provide a better understanding of the invention, a set of drawings is provided. Said drawings form an integral part of the description and illustrate embodiments of the invention, which should not be interpreted as restricting the scope of the invention, but just as an example of how the invention can be carried out. The drawings comprise the following figures:
Figure 1 shows an exploded perspective view of the cover and support assembly for an electric socket.
Figure 2 shows another exploded perspective view of the cover and support assembly but form the opposite side.
Figures 3a shows the positioning of the magnetic parts forming an angle in the case where the magnetic parts are designed for having two stable positions.
Figure 3b shows the magnetic force (or torque) between the magnetic parts in the case shown in FIG. 3a.
Figures 4a shows the positioning of the magnetic parts forming an angle in the case where the magnetic parts are designed for having four stable positions.
Figure 4b shows the magnetic force (or torque) between the magnetic parts in the case shown in FIG. 4a.
Figure 5a shows a socket outlet where to apply the support assembly and the cover according to an embodiment.
Figure 5b shows the front of a socket outlet provided with a cover and support assembly, in the opened position.
Figure 5c the front of a socket outlet provided with a cover and support assembly, in the closed position.
Figure 6 shows the fitting of the magnetic part for the support assembly. The side shown is the side destined to be opposite to the side where the cover is placed.
Figure 7 shows an expanded view of the pin/orifice articulation.
Figure 8 shows an embodiment in which the parts are magnetic in a minimum potential energy configuration, corresponding to a closed cover position, that is 0 degrees.
Figure 9 shows the same embodiment as Figure 8, but in a configuration of maximum potential energy, corresponding to a cover position disposed at 90 degrees.
Figure 10 shows the superposition of the cover and frame magnets of Figures 8 and 9, in a closed cover position, i.e. a stable position, that is, the configuration of figure 8.
Figure 11 shows the assembly in its entirety, in the closed configuration.
Figures 12 and 13 are analogous to Figures 10 and 11 respectively, but correspond to a relative position between cover and frame of 90 degrees, i.e. to an unstable position.
Figures 14 and 15 are analogous to Figures 10 and 11 respectively, but correspond to a relative position between cover and frame of 180 degrees, i.e. again a stable position.

### DESCRIPTION OF A WAY OF CARRYING OUT THE INVENTION

The preferred embodiment disclosed herein is the particular case of the invention where the support assembly is a frame 2 that can be coupled, preferably with an adhesive 3, to the base of an electric socket ES.

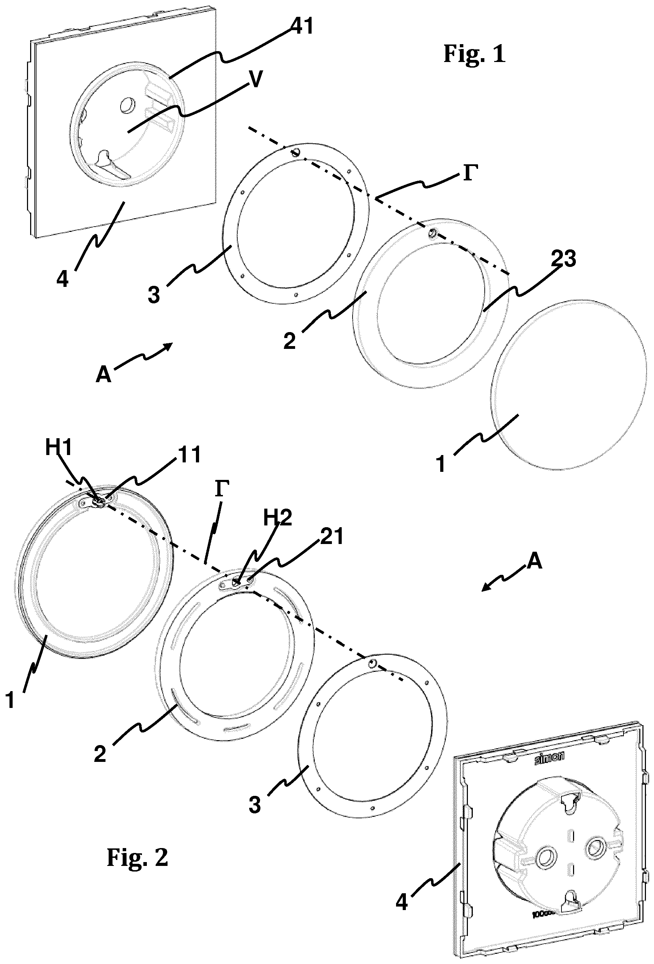

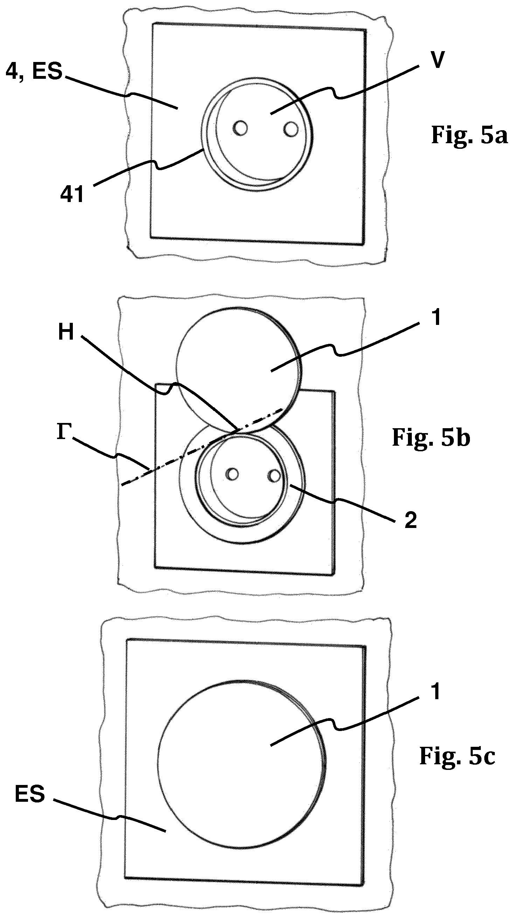

Fig. 1 shows the cover 1 and support 2 assembly A for a housing V, like for example the housing V of the electric socket ES shown in FIGS. 5a to 5c.

The cover 1 and the frame 2 are hinged by a hinge H, which details can be seen in FIG. 2 for example. Specifically, the hinge H is formed by a pin H1 protruding from the cover 1 and an orifice H2 in the frame 2.

The orifice H2 is complementary to the pin H1 such that the cover 1 can rotate with respect to the frame 2 around an axis Γ having a direction that is perpendicular to the cover 1, as shown in FIGS. 1, 2 and 5b.

According to the present invention, both the cover 1 and the frame 2 comprise a part 11, 21 (11', 21') made of a magnetic or ferromagnetic material respectively.

The parts 11, 21 are arranged in the cover 1 and the frame 2 and placed in the proximity of the pin H1 and orifice H2 of the hinge H respectively such that they define at least:
- a first stable position of the cover 1 with respect to the frame 2 shown in FIG. 5c, where the cover fully covers the housing; and
- a second stable position of the cover 1 with respect to the frame 2, where the cover is placed at 180º from the first position, as shown in FIG. 5b.

Therefore, starting from the first stable position, the user, by simply pushing the cover 1 laterally, will rotate it around the axis Γ until it will reach a position close to the second stable position, where the cover 1 will be propelled.

As shown in FIG. 1 for example, the frame 2 has an internal perimeter 23 complementary to a wall 41 of a base 4, which provides for a first attaching means of the frame 2 to the base 4. If there is friction enough, such means will suffice to hold the frame 2 in its place.

As a complement to these attaching means, or an alternative in case there is no wall 41, the support assembly comprises an adhesive 3 for joining the frame 2 to a base 4.

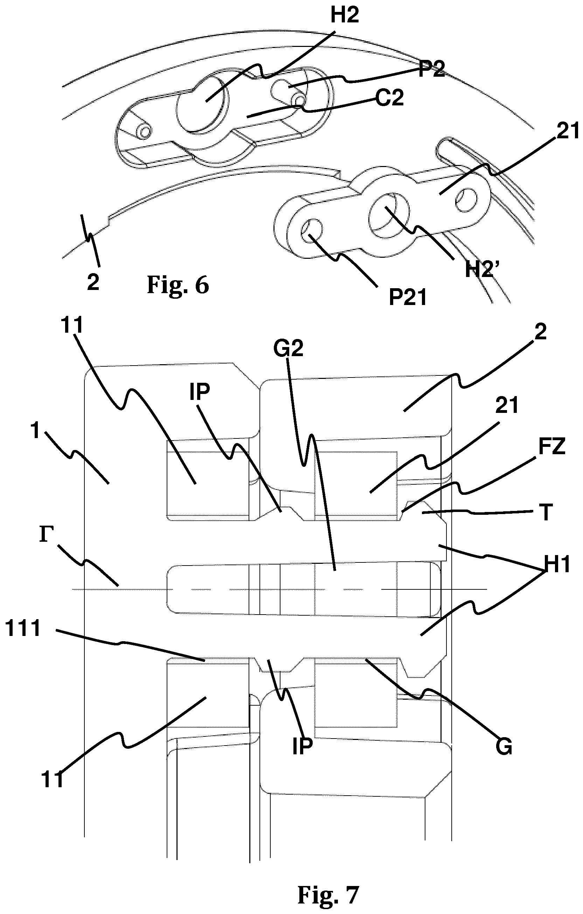

As shown in FIG. 6, according to a particular embodiment, the magnetic/ ferromagnetic parts 11, 21 can be inserted in the cover 1 or frame in a cavity having a complementary shape. The thickness of the part can correspond to the depth of the cavity, and then the parts and the external surface are flush. Another possibility would be to have the parts slightly protruding. And another possibility is that the parts are totally embedded in the cover or frame material.

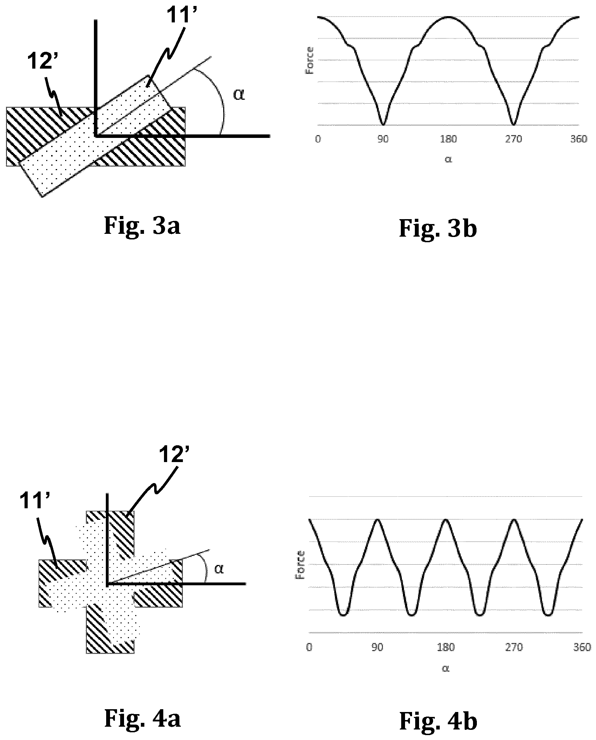

In the embodiment shown in the figures 1, 2, 6 and 7 the parts have generally the shape shown in figure 3a, and therefore the magnetic force therebetween corresponds to the graphic shown in FIG. 3b. However, as shown in FIGs 4a and 4b the parts 11', 21' could be designed to define four stable positions angularly distributed.

Figures 6 and 7 show the details of the hinge, details designed to ensure maximum ergonomics and great ease of manufacture.

In figure 6 the detail of the fitting of the magnetic part 21 in the frame 2 is shown. The latter has a cavity C2 complementary to the part 21, and the tolerances are sufficiently adjusted so that the fit is sufficient to hold the part 21 by friction. It could also be envisaged to add some adhesive. Likewise, pins P2 are provided in the frame, which are easily moldable, and complementary holes P21 in the part 21. Finally, the orifice H2 for the passing through of the pin H1 of cover 1 is shown, and a complementary orifice H2' in part 21. In the embodiment shown, the cavity C2 is on the side of the frame 2 opposite the side where the cover 1 is placed.

The fitting of the magnetic part 11 of the cover 1 can be done in a similar way.

In figure 7 a section at the hinge level is shown in detail. It will again be appreciated here that it has been carefully designed so that the ergonomics of the whole is optimized. The objective sought is a smooth reaction, so that the guiding must have a minimum thickness. This smooth reaction in combination with the magnetic / ferromagnetic parts, will guarantee the ideal positioning of the cover 1 with respect to the frame 2 automatically, such that the user does not need to accompany the cover all the way through. Another objective sought is a minimum manufacturing cost, which is, the more features that can be moulded the better. For this purpose it is first envisaged that the pin H1 is made in two substantially semi-cylindrical parts, and separated by a space G2, so that they can be compressed towards the space G2 and thus allow the teeth T to be inserted into the orifice H2' of the magnetic part 21 and thus retain the cover 1. The teeth T have a cylindrical support surface on the magnetic part 21, so that they slope and if a high force is exerted on the cover 1, it will just be disassembled. That is, this union should only be strong enough so that the cover 1 does not come out of its place by a slight force.

Another advantageous feature is that a gap G is provided between pin H1 and orifice H2 to avoid friction. The hinge generates a minimal friction, which takes place in an area FZ between the perimeter of the orifice H2 and the slope of the teeth T, as shown in FIG. 7.

As can be seen in the section of figure 7, the pin H1 comprises two intermediate projections IP, in each semi-cylindrical portion, for retaining the part 11.

It is noted that the parts 11 and 21 preferably have the same shape so that they are arranged parallel, thus increasing their magnetic interaction. The fact that they are two identical parts 11, 21 each provided with an orifice 111, H2 for the passage of pin H1 contributes greatly to confer on the support assembly its improved ergonomics.

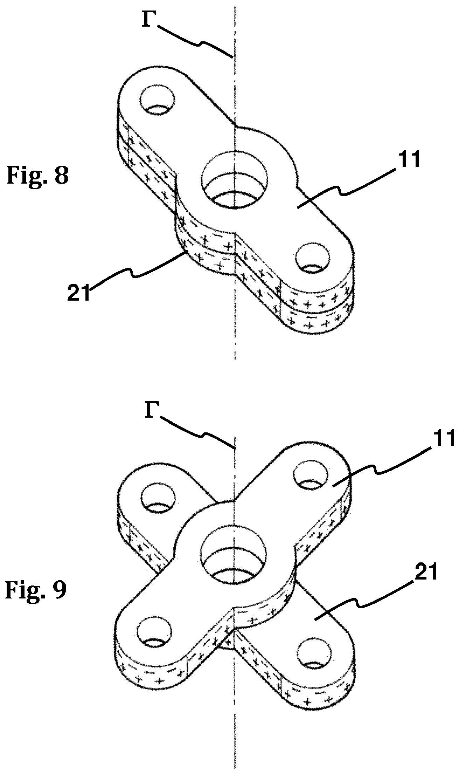

Figures 8 to 15 show an embodiment in which the magnets perform both the guiding function and the stability function.

Figure 8 shows the two magnetic parts 11 and 21. As can be seen, each has its poles indicated, the negative in the upper portion of each of them, the positive below. In these circumstances, the binding force is maximum, so that a minimum of potential energy is obtained.

The relative displacement between both parts that goes through a path of minimum potential energy corresponds to a rotation around the axis Γ. Thus, as seen in Figure 9, the magnets still have a joining force between them, whose resultant has the direction of the axis (by symmetry), which holds them together. Figure 9 corresponds to a configuration in which 90 degrees have not yet been reached, but almost. In this configuration, the magnets would tend to come back to the Fi.8 configuration.

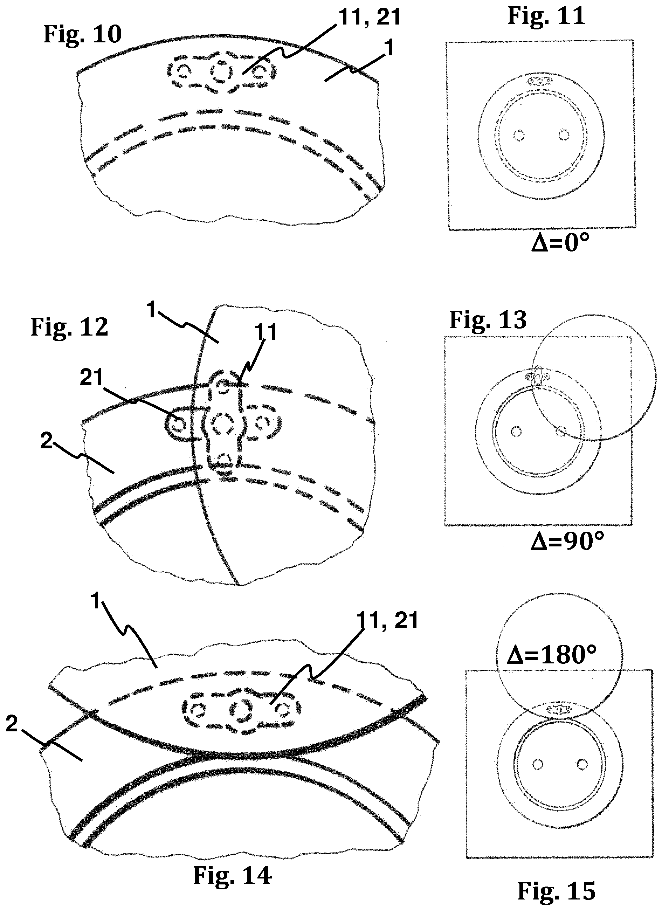

In a configuration of angle between parts of 90 degrees an unstable equilibrium position is reached, as shown in figures 12 and 13. It is an unstable position according to the degree of freedom of rotation. However, the binding force according to the direction Γ ensures that the magnets are rotating around the axis of rotation Γ. This is without the need for additional guidance elements. However, particular embodiments could include further guiding elements, purely mechanical.

The orifices shown (optional) can have the function of serving as a fastener to the cover 1 and frame 2 or they can serve for the passage of an additional guiding element, such as the pin described in relation to the embodiment discussed above.

Figures 10 to 15 show the sequence obtained between the position of minimum potential energy (figures 10 and 11), from closed cover, to the other position of minimum potential energy (figures 14 and 15), from completely open cover, passing through the unstable equilibrium position shown in figures 12 and 13.

In the position of unstable equilibrium a small impulse will suffice to bring the cover to one of the two stable positions, that is, fully open or totally closed.

If instead of the magnets shown in Fig. 8 the magnets have the shape of a cross, as shown in Fig. 4a, the configuration shown in figures 12 and 13 would become stable position as well.

In this text, the term "comprises" and its derivations (such as "comprising", etc.) should not be understood in an excluding sense, that is, these terms should not be interpreted as excluding the possibility that what is described and defined may include further elements.

The invention is obviously not limited to the specific embodiments described herein, but also encompasses any variations that may be considered by any person skilled in the art within the general scope of the invention as defined in the claims.

## Claims

1. Cover (1) and support (2, 4) assembly (A) for a housing (V), the cover (1) and the support (2, 4) being hinged by a hinge (H), the hinge (H) being configured to allow the cover (1) to rotate with respect to the support (2, 4) in a direction that is perpendicular to the cover (1), **characterized in that** both the cover (1) and the support (2, 4) comprise a part (11, 21) made of a magnetic or ferromagnetic material, the parts (11, 21) being arranged in the cover (1) and the support (2, 4) and placed in the proximity of or in the hinge (H) such that they define at least a first and a second stable positions of the cover (1) with respect to the support (2, 4), the cover (1) covering the housing (V) in a first position, a second position being placed at an angle from the first position.

2. Support assembly (A) according to claim 1, wherein the hinge (H) is formed by a pin (H1) protruding from the cover (1) or from the support (2, 4) and an orifice (H2) in the support (2, 4) or in the cover (1) respectively, the orifice (H2) being complementary to the pin (H1), the parts (11, 21) being placed in the proximity of the pin (H1) and orifice (H2) of the hinge (H) respectively.

3. Support assembly (A) according to any of the previous claims, wherein the support (2) is a frame (2).

4. Support assembly (A) according to claim 3, wherein the frame (2) has an internal perimeter (23) complementary to an internal wall (41) of a receptacle of a socket base (4).

5. Support assembly (A) according to claim 3 or claim 4, wherein the external perimeters of the cover (1) and the frame (2) match.

6. Support assembly (A) according to any of claims 3 to 5, which comprises an adhesive (3) for joining the frame (2) to a socket base (4).

7. Support assembly according to claim 1, wherein the support (4) is a socket base (4) destined to be embedded in a wall.

8. Support assembly according to any of the previous claims, wherein the base (4) is an electric socket.

9. Support assembly according to any of the previous claims, wherein the magnetic part (11) of the cover (1) is totally embedded in the cover (1), is flush fitted with the surface which faces the support (2), is fitted and protruding from the surface which faces the support (2) or is joined to the surface which faces the support (2).

10. Support assembly according to claim 9, wherein the magnetic part (21) of the support (2) is totally embedded in the support (2), is flush fitted with the surface which faces the cover (1), is fitted and protruding from the surface which faces the cover (1) or is joined to the surface which faces the cover (1).

11. Support assembly according to any of the preceding claims, wherein the magnetic parts (11', 21') define four stable positions angularly distributed.

12. Support assembly according to any of the preceding claims, wherein the magnetic part (11) of the cover (1) has a through hole (111) such that the pin (H1) passes therethrough.

13. Support assembly according to any of the preceding claims, wherein the pin (H1) is made of two semi-cylindrical portions separated by a gap, each semi-cylindrical portion comprising a retaining hook.

14. Support assembly according to any of the preceding claims, wherein the magnetic parts (11, 21) are oblong, the longitudinal dimension being comprised between 12 and 14 mm, the transversal dimension being comprised between 4 and 6 mm, the thickness being comprised between 1 and 2 mm.

15. Support assembly according to any of the preceding claims, wherein one of the magnetic part (11) or the magnetic part (21) is made of neodymium.
